# EUROPEAN PATENT SPECIFICATION

(11) **EP 3 970 992 B1**
(45) Date of publication and mention of the grant of the patent: **01.11.2023**
(21) Application number: 21194463.2
(22) Date of filing: 02.09.2021
(51) Int. Cl.: B60C 9/20, B60C 19/00, B60C 9/28

(54) **MOTORCYCLE TIRE**
MOTORRADREIFEN
PNEUMATIQUE DE MOTOCYCLETTE

(30) Priority: 17.09.2020 JP 2020156671
(43) Date of publication of application: 23.03.2022
(73) Proprietor: Sumitomo Rubber Industries, Ltd., Kobe-shi, Hyogo-ken 651-0072 (JP)
(72) Inventor: KOBORI, Chihiro, Kobe-shi, 651-0072 (JP); KOBORI, Shuji, Kobe-shi, 651-0072 (JP)
(74) Representative: Manitz Finsterwald Patent- und Rechtsanwaltspartnerschaft mbB

(56) References cited:
- EP-A1- 1 545 910
- EP-A1- 3 453 541
- JP-A- H1 081 109
- JP-A- 2013 141 884
- US-A1- 2005 217 783
- US-B2- 8 770 245

## Description

### BACKGROUND OF THE INVENTION

### Field of the Invention

The present invention relates to a motorcycle tire.

### Description of the Background Art

Japanese Patent No. 4566903 discloses a motorcycle tire having a tread portion. The tread portion includes a center region, shoulder regions, and intermediate regions. In the motorcycle tire, a modulus of a rubber composition of each of the center region, the shoulder regions, and the intermediate regions is defined.

In the above-described motorcycle tire, stiffness is changed at a boundary between the regions in the tread portion. Therefore, there is room for improvement in transient characteristics during shift from straight running to cornering or during shift from cornering to straight running.
EP 3 453 541 A1 discloses a motocycle tire comprising the features according to the preamble of claim 1.
US 8 770 245 B2 discloses a motocycle tire comprising features according to a related technology.
JP 2013 141884 A also discloses a motocycle tire comprising features according to a related technology.
US 2005/0217783 A1 also discloses a motocycle tire comprising features according to a related technology.
EP 1 545 910 A1 also discloses a motocycle tire comprising features according to a related technology.
JP H10 81109 A also discloses a motocycle tire comprising features according to a related technology.

The present invention has been made in view of the aforementioned circumstances, and a main object of the present invention is to provide a motorcycle tire that can enhance transient characteristics and cornering performance.

### SUMMARY OF THE INVENTION

This object is satisfied by a motorcycle tire comprising the features of claim 1. The a motorcycle tire includes: a tread portion; a carcass; and a breaker layer disposed outwardly of the carcass and inwardly of the tread portion in a tire radial direction. The tread portion includes a pair of shoulder regions disposed on both outermost sides, respectively, in a tire axial direction, a pair of middle regions disposed adjacent to inner sides of the pair of shoulder regions, respectively, in the tire axial direction, and a crown region disposed between the pair of middle regions by dividing a tread development width into five equal portions. The breaker layer is formed of a breaker ply in which a plurality of breaker cords are aligned. A pair of end portions of the breaker ply are disposed in the pair of shoulder regions, respectively. The plurality of breaker cords have an angle θc relative to a tire circumferential direction at positions Pc of end portions of the crown region, and an angle θs relative to the tire circumferential direction at positions Ps that are distant from the end portions of the breaker ply by 5 mm in an axially inward direction of the tire, on both sides of a tire equator. The angle of the plurality of breaker cords is gradually increased from the angle θc to the angle θs, and a change rate ((θs-θc)/θc) between the angle θc and the angle θs is not less than 15%.

In the motorcycle tire of the present invention, the tread portion preferably has a bandless structure in which tread rubber is disposed outwardly of the breaker layer in the tire radial direction so as to be in direct contact with the breaker layer.

In the motorcycle tire of the present invention, the change rate ((θs-θc)/θc) is preferably not greater than 70%.

In the motorcycle tire of the present invention, the change rate ((θs-θc)/θc) is preferably not greater than 50%.

In the motorcycle tire of the present invention, the change rate ((θs-θc)/θc) is preferably not less than 30%.

In the motorcycle tire of the present invention, ends that are the number of the breaker cords per width of 50 mm in a direction perpendicular to the breaker cords in the breaker ply are preferably reduced outwardly from the positions Pc in the tire axial direction.

In the motorcycle tire of the present invention, the ends at each position Pc are preferably 30 to 50.

In the motorcycle tire of the present invention, the ends at each position Pc are preferably 35 to 45.

In the motorcycle tire of the present invention, the breaker cords are preferably organic fiber cords or steel cords.

In the motorcycle tire of the present invention, the motorcycle tire is preferably used for a front wheel.

The present invention has the above-described structure and thus allows enhancement of transient characteristics and cornering performance.

### BRIEF DESCRIPTION OF THE DRAWINGS

FIG. 1 is a cross-sectional view of a motorcycle tire according to one embodiment of the present invention; and
FIG. 2 is a conceptual diagram illustrating development of breaker cord alignment on a plane.

### DESCRIPTION OF THE PREFERRED EMBODIMENTS

One embodiment of the present invention will be described below with reference to the drawings.

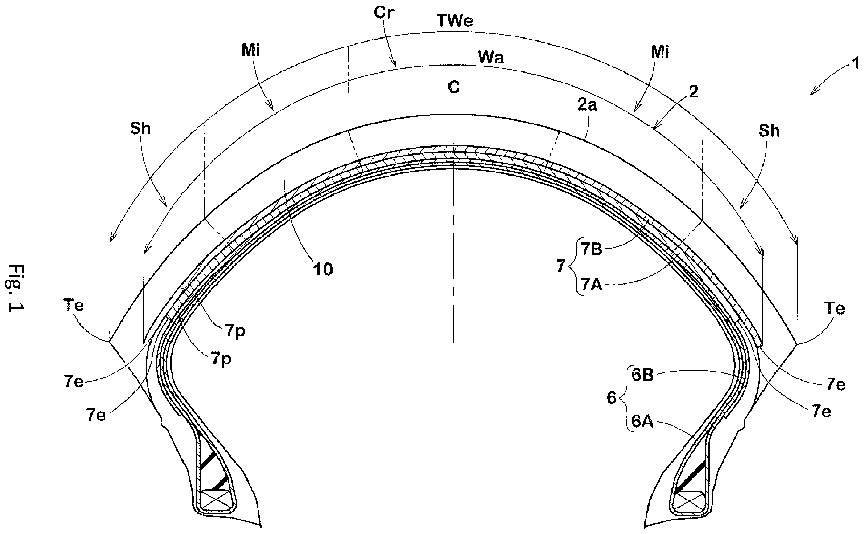

FIG. 1 is a tire meridian cross-sectional view of a motorcycle tire (hereinafter, may be simply referred to as "tire") 1 in a normal state according to one embodiment of the present invention. The tire 1 of the present embodiment is preferably used for, for example, on-road running on a dry asphalt road surface or the like. However, the usage of the tire 1 of the present invention is not limited to such a usage.

The "normal state" represents a state in which the tire 1 is mounted on a normal rim (not shown) and is inflated to a normal internal pressure, and no load is applied to the tire 1. Unless otherwise specified, the dimensions and the like of components of the tire are represented as values measured in the normal state.

The "normal rim" represents a rim that is defined by a standard, in a standard system including the standard on which the tire 1 is based, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard on which the tire 1 is based, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

As shown in FIG. 1, in the tire 1 of the present embodiment, an outer face 2a of a tread portion 2 is curved outwardly in the tire radial direction so as to be projecting-arc-shaped on the tire meridian cross-section.

The tread portion 2 includes a pair of shoulder regions Sh, a pair of middle regions Mi, and a crown region Cr by dividing a tread development width TWe into five equal portions. The shoulder regions Sh are disposed on both outermost sides, respectively, in the tire axial direction. The middle regions Mi are disposed adjacent to inner sides, respectively, of the shoulder regions Sh in the tire axial direction. The crown region Cr is disposed between the pair of middle regions Mi. The tread development width TWe is a distance in the tire axial direction between tread ends Te in the case of the tread portion 2 being developed onto a plane.

The tire 1 of the present embodiment includes a carcass 6, and a breaker layer 7 disposed outwardly of the carcass 6 and inwardly of the tread portion 2 in the tire radial direction. Furthermore, the tire 1 includes, for example, tread rubber 10 disposed outwardly of the breaker layer 7 in the tire radial direction.

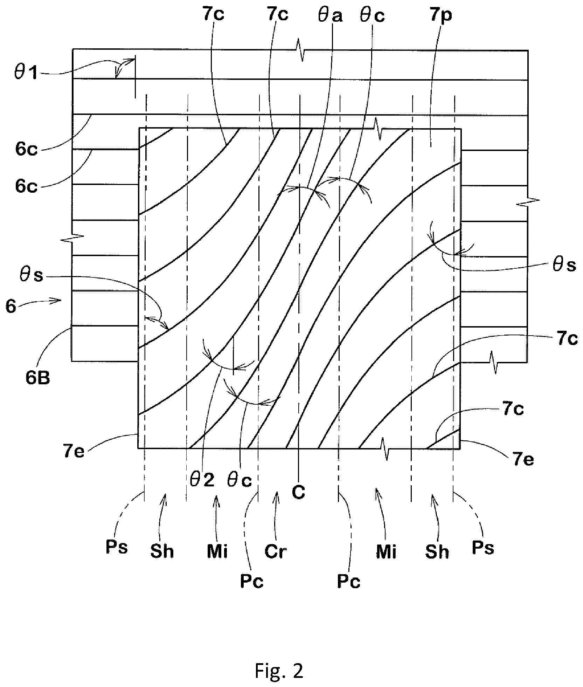

The carcass 6 includes one or more carcass plies each having carcass cords 6c (shown in FIG. 2) aligned at an angle θ1 of, for example, 75 to 90° relative to the tire circumferential direction. In the present embodiment, the carcass 6 includes two carcass plies 6A, 6B. For example, the carcass cord 6c is preferably an organic fiber cord or a steel cord.

The breaker layer 7 is formed as a breaker ply 7p in which a plurality of breaker cords 7c (shown in FIG. 2) are aligned. Inclination of the breaker cord 7c exerts a great influence on stiffness of the tread portion 2. That is, in a case where the breaker cord 7c is inclined at a small angle relative to the tire circumferential direction, stiffness of the tread portion 2 in the tire circumferential direction is increased. Meanwhile, in a case where the breaker cord 7c is inclined at a great angle relative to the tire circumferential direction, stiffness of the tread portion 2 in the tire axial direction is increased. A pair of end portions 7e of the breaker ply 7p are disposed in the pair of shoulder regions Sh, respectively.

FIG. 2 is a conceptual diagram illustrating development of alignment of the breaker cords 7c on a plane. As shown in FIG. 2, the plurality of the breaker cords 7c have an angle θc relative to the tire circumferential direction at positions Pc and an angle θs relative to the tire circumferential direction at positions Ps, on both sides of a tire equator C. The positions Pc are positions of the end portions of the crown region Cr. The positions Ps are positions that are distant from the end portions 7e of the breaker ply 7p by 5 mm in the axially inward direction of the tire. At the position Ps, a relatively high ground contact pressure (load) acts during cornering (hereinafter, referred to as full bank running) in which a bank angle is large. At the position Pc, a relatively high ground contact pressure (load) acts during cornering (hereinafter, referred to as intermediate bank running) in which a bank angle is between an angle for the full bank running and an angle for straight running. Furthermore, in motorcycles, braking is reduced from the intermediate bank running toward the full bank running, thereby reducing load.

The angle of each of the breaker cords 7c is gradually increased from the angle θc to the angle θs. Thus, stiffness of the tread portion 2 in the tire circumferential direction is gradually reduced from the position Pc toward the position Ps. Therefore, in the motorcycle tire 1 of the present embodiment, transient characteristics from the intermediate bank running toward the full bank running are enhanced.

In the plurality of the breaker cords 7c, a change rate ((θs-θc)/θc) between the angle θc and the angle θs is not less than 15%. Thus, cornering power is increased from the position Pc toward the position Ps, whereby cornering performance from the intermediate bank running toward the full bank running is enhanced. Therefore, the tire 1 of the present embodiment exhibits excellent transient characteristics and cornering performance. The change rate ((θs-θc)/θc) is preferably not less than 30% in order to further enhance the cornering performance from the intermediate bank running toward the full bank running.

If the change rate ((θs-θc)/θc) is excessively great, change of cornering power is excessively great, and cornering performance may deteriorate. Therefore, the change rate ((θs-θc)/θc) is preferably not greater than 70% and more preferably not greater than 50%.

The angle θc is, but is not particularly limited to, preferably not less than 10° and more preferably not less than 15°, and preferably not greater than 50°, more preferably not greater than 40°, even more preferably not greater than 30°, and, furthermore, still more preferably not greater than 20°.

In the present invention, at each breaker cord 7c, an angle θ2 relative to the tire circumferential direction is gradually increased from the tire equator C to the position Pc. Thus, transient characteristics from the straight running to the intermediate bank running are also enhanced. An angle θa of the breaker cord 7c at the position of the tire equator C is, but is not particularly limited to, preferably not less than 10° and more preferably not less than 12°, and preferably not greater than 40°, more preferably not greater than 30°, and even more preferably not greater than 18°. At each breaker cord 7c, for example, the angle θ2 relative to the tire circumferential direction is gradually increased from the position Ps to an outer end 7E in the tire axial direction.

Ends E that are the number of the breaker cords 7c per width of 50 mm in the direction perpendicular to the breaker cords 7c in the breaker ply 7p are preferably reduced outwardly from the position Pc in the tire axial direction. Thus, the stiffness of the tread portion 2 is reduced outwardly from the position Pc in the tire axial direction, whereby transient characteristics are more effectively enhanced from the intermediate bank running to running in which the bank angle is increased. From such a standpoint, the ends E are preferably continuously reduced from the position Pc to the position Ps. In the description herein, the ends E in the breaker ply 7p at the position Pc are indicated as "ends Ec".

The ends Ec are preferably 30 to 50. Since the ends Ec are not less than 30, stiffness of the tread portion 2 is ensured and high cornering performance is maintained. Since the ends Ec are not greater than 50, stiffness of the tread portion 2 is inhibited from being excessively enhanced, and ground contact feeling is maintained, thereby enhancing transient characteristics. From such a standpoint, the ends Ec are more preferably not less than 35 and more preferably not greater than 45.

In the present embodiment, the ends E are gradually reduced from the tire equator C to the position Pc. Thus, transient characteristics from the straight running to the intermediate bank running are also enhanced.

The breaker cord 7c is preferably an organic fiber cord or a steel cord. The breaker cord 7c having such a structure maintains stiffness of the breaker layer 7 and enhances cornering performance. For the organic fiber cord, for example, polyester, nylon, rayon, or aramid is preferably adopted.

As shown in FIG. 1, in the present embodiment, the breaker layer 7 is formed of two layers of breaker plies 7A, 7B stacked on the inner and the outer sides in the tire radial direction. In the present embodiment, the inner breaker ply 7A has a development width less than the outer breaker ply 7B. A development width Wa between both the end portions 7e of the outer breaker ply 7B is preferably not less than 85% of the tread development width TWe and preferably not greater than 95% thereof.

In the present embodiment, in both the inner breaker ply 7A and the outer breaker ply 7B, the angle of the breaker cord 7c is gradually increased from the angle θc to the angle θs, and the change rate ((θs-θc)/θc) is not less than 15%. However, the present invention is not limited thereto. For example, the breaker layer 7 may be formed of one breaker ply 7p. Furthermore, in a case where the breaker layer 7 is formed of the two breaker plies 7A, 7B, the breaker plies 7A, 7B may be formed such that the angle of the breaker cords 7c of one of the breaker plies 7p is gradually increased from the angle θc to the angle θs, and the change rate ((θs-θc)/θc) is not less than 15%.

The tread portion 2 of the present embodiment has a bandless structure in which the tread rubber 10 is disposed outwardly of the breaker layer 7 in the tire radial direction so as to be in direct contact with the breaker layer 7. In other words, the tread portion 2 of the present embodiment has no band layer formed of a band ply having cords aligned at an angle of less than 15° relative to the tire circumferential direction. In the tread portion 2 having such a structure, stiffness is inhibited from being excessively increased, and transient characteristics are excellent.

The tire 1 having such a structure is preferably used for, for example, front wheels. A high load acts on a motorcycle due to braking from straight running toward the intermediate bank during cornering, and breaking is released and a load is reduced from the intermediate bank to the full bank. The load on the tire 1 is higher in a front wheel than in a rear wheel. Therefore, by using the tire 1 of the present embodiment for a front wheel, cornering can be stabilized.

Although the particularly preferable embodiment of the present invention has been described above in detail, various modifications can be made to implement the present invention within the scope of the appended claims.

### Examples

Motorcycle tires having the basic structure shown in FIG. 1 were produced as sample tires. Transient characteristics and cornering performance were tested for each sample tire. Specifications common to the sample tires and a test method were as follows.

### <Transient characteristics and cornering performance>

Each sample tire was mounted to a front wheel of a motorcycle (engine displacement of 1000 cc) under the following conditions. A commercially available tire was mounted to a rear wheel under the following conditions. The motorcycle was caused to actually run on a dry asphalt road surface in a test course by a test rider, and sensory evaluation for each performance from intermediate bank to full bank was made by the test rider. The results are indicated as scores in a ten-score-method with the best score being 10. The greater the value is, the more excellent each performance is.

Specifications (size, rim, internal pressure) of sample tire: 120/70ZR17, 17×3.5MT, 200 kPa

Specifications (size, rim, internal pressure) of rear wheel tire: 180/55R17, 17×5.5MT, 200 kPa

Test results are indicated in Table 1.

**[Table 1]**

| | Comp. Ex. 1 | Comp. Ex. 2 | Comp. Ex. 3 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Change rate (%) | 7 | -20 | 12 | 47 | 62 | 17 | 19 | 32 | 47 | 47 | 47 | 47 |
| (θs-θc)/θc | | | | | | | | | | | | |
| θc(°) | 18 | 18 | 18 | 18 | 18 | 18 | 18 | 18 | 15 | 20 | 8 | 53 |
| Ec (Ends number) | 35 | 40 | 36 | 34 | 35 | 37 | 35 | 37 | 34 | 34 | 34 | 34 |
| Ends at position Ps | 30 | 32 | 52 | 32 | 41 | 38 | 32 | 33 | 35 | 33 | 42 | 30 |
| (Ends number) | | | | | | | | | | | | |
| Transient characteristics [The best score is 10] | 4.0 | 1.0 | 2.0 | 8.0 | 7.5 | 6.0 | 8.0 | 6.5 | 6.0 | 6.5 | 5.0 | 5.5 |
| Cornering performance [The best score is 10] | 4.0 | 2.0 | 3.0 | 8.5 | 8.0 | 7.0 | 7.5 | 8.0 | 7.0 | 7.0 | 5.5 | 5.5 |

According to the test results, it is understood that the tires of the examples were superior in transient characteristics and cornering performance to the tires of the comparative examples.

## Claims

1. A motorcycle tire (1) comprising:
a tread portion (2);
a carcass (6); and
a breaker layer (7) disposed outwardly of the carcass (6) and inwardly of the tread portion (2) in a tire radial direction, wherein
the tread portion (2) includes a pair of shoulder regions (Sh) disposed on both outermost sides, respectively, in a tire axial direction, a pair of middle regions (Mi) disposed adjacent to inner sides of the pair of shoulder regions (Sh), respectively, in the tire axial direction, and a crown region (Cr) disposed between the pair of middle regions (Mi) by dividing a tread development width (TWe) into five equal portions,
the breaker layer (7) is formed of a breaker ply (7p) in which a plurality of breaker cords (7c) are aligned,
a pair of end portions (7e) of the breaker ply (7p) are disposed in the pair of shoulder regions (Sh), respectively,
the plurality of breaker cords (7c) have an angle θc relative to a tire circumferential direction at positions Pc of end portions of the crown region (Cr), and an angle θs relative to the tire circumferential direction at positions Ps that are distant from the end portions (7e) of the breaker ply (7p) by 5 mm in an axially inward direction of the tire (1), on both sides of a tire equator (C), and
an angle (θ2) relative to the tire circumferential direction of the plurality of breaker cords (7c) is gradually increased from the angle θc to the angle θs, and a change rate ((θs-θc)/θc) between the angle θc and the angle θs is not less than 15%,
**characterized in that**
at each breaker cord (7c), the angle (θ2) is gradually increased from the tire equator (C) to the position (Pc).

2. The motorcycle tire (1) according to claim 1, wherein the tread portion (2) has a bandless structure in which tread rubber (10) is disposed outwardly of the breaker layer (7) in the tire radial direction so as to be in direct contact with the breaker layer (7).

3. The motorcycle tire (1) according to claim 1 or 2, wherein the change rate ((θs-θc)/θc) is not greater than 70%.

4. The motorcycle tire (1) according to claim 3, wherein the change rate ((θs-θc)/θc) is not greater than 50%.

5. The motorcycle tire (1) according to any one of claims 1 to 4, wherein the change rate ((θs-θc)/θc) is not less than 30%.

6. The motorcycle tire (1) according to any one of claims 1 to 5, wherein ends (E) that are the number of the breaker cords (7c) per width of 50 mm in a direction perpendicular to the breaker cords (7c) in the breaker ply (7p) are reduced outwardly from the positions Pc in the tire axial direction.

7. The motorcycle tire (1) according to claim 6, wherein the ends (Ec) at each position Pc are 30 to 50.

8. The motorcycle tire (1) according to claim 7, wherein the ends (Ec) at each position Pc are 35 to 45.

9. The motorcycle tire (1) according to any one of claims 1 to 8, wherein the breaker cords (7c) are organic fiber cords or steel cords.

## Patentansprüche

1. Motorradreifen (1), umfassend:
einen Laufflächenabschnitt (2);
eine Karkasse (6); und
eine Breakerschicht (7), die in einer Reifenradialrichtung außerhalb der Karkasse (6) und innerhalb des Laufflächenabschnitts (2) angeordnet ist, wobei
der Laufflächenabschnitt (2) ein Paar von Schulterbereichen (Sh), die in einer Reifenaxialrichtung jeweils an den beiden äußersten Seiten angeordnet sind, ein Paar von Mittelbereichen (Mi), die jeweils in der Reifenaxialrichtung angrenzend an Innenseiten des Paares von Schulterbereichen (Sh) angeordnet sind, und einen zwischen dem Paar von Mittelbereichen (Mi) angeordneten Kronenbereich (Cr) aufweist, indem eine Laufflächen-Abwicklungsbreite (TWe) in fünf gleiche Teile geteilt wird,
die Breakerschicht (7) aus einer Breakerlage (7p) gebildet ist, in der mehrere Breakerkorde (7c) ausgerichtet sind,
ein Paar von Endabschnitten (7e) der Breakerlage (7p) jeweils in dem Paar von Schulterbereichen (Sh) angeordnet ist,
die mehreren Breakerkorde (7c) einen Winkel θc bezogen auf eine Reifenumfangsrichtung an Positionen Pc von Endabschnitten des Kronenbereichs (Cr) und einen Winkel θs bezogen auf die Reifenumfangsrichtung an Positionen Ps aufweisen, die von den Endabschnitten (7e) der Breakerlage (7p) um 5 mm in einer axialen Einwärtsrichtung des Reifens (1) auf beiden Seiten eines Reifenäquators (C) entfernt sind, und
ein Winkel (θ2) der mehreren Breakerkorde (7c) bezogen auf die Reifenumfangsrichtung von dem Winkel θc bis zu dem Winkel θs allmählich zunimmt und eine Änderungsrate ((θs-θc)/θc) zwischen dem Winkel θc und dem Winkel θs nicht kleiner als 15% ist,
**dadurch gekennzeichnet, dass**
der Winkel (θ2) an jedem Breakerkord (7c) von dem Reifenäquator (C) bis zu der Position (Pc) allmählich zunimmt.

2. Motorradreifen (1) nach Anspruch 1, wobei der Laufflächenabschnitt (2) eine bandlose Struktur aufweist, in der ein Laufflächengummi (10) in der Reifenradialrichtung derart außerhalb der Breakerschicht (7) angeordnet ist, dass es mit der Breakerschicht (7) in direktem Kontakt steht.

3. Motorradreifen (1) nach Anspruch 1 oder 2, wobei die Änderungsrate ((θs-θc)/θc) nicht größer als 70% ist.

4. Motorradreifen (1) nach Anspruch 3, wobei die Änderungsrate ((θs-θc)/θc) nicht größer als 50% ist.

5. Motorradreifen (1) nach einem der Ansprüche 1 bis 4, wobei die Änderungsrate ((θs-θc)/θc) nicht kleiner als 30% ist.

6. Motorradreifen (1) nach einem der Ansprüche 1 bis 5, wobei Enden (E), welche die Anzahl der Breakerkorde (7c) bezogen auf eine Breite von 50 mm in einer Richtung rechtwinklig zu den Breakerkorden (7c) in der Breakerlage (7p) sind, in der Reifenaxialrichtung von den Positionen Pc nach außen reduziert sind.

7. Motorradreifen (1) nach Anspruch 6, wobei die Enden (Ec) an jeder Position Pc 30 bis 50 sind.

8. Motorradreifen (1) nach Anspruch 7, wobei die Enden (Ec) an jeder Position Pc 35 bis 45 sind.

9. Motorradreifen (1) nach einem der Ansprüche 1 bis 8, wobei die Breakerkorde (7c) organische Faserkorde oder Stahlkorde sind.

## Revendications

1. Pneumatique pour motocyclette (1) comprenant :
une portion formant bande de roulement (2) ;
une carcasse (6) ; et
une couche d'armature de sommet (7) disposée à l'extérieur de la carcasse (6) et à l'intérieur de la portion formant bande de roulement (2) dans une direction radiale du pneumatique, dans lequel
la portion formant bande de roulement (2) inclut une paire de régions d'épaulement (Sh) disposées sur les deux côtés les plus à l'extérieur, respectivement, dans une direction axiale du pneumatique, une paire de régions médianes (Mi) disposées de manière adjacente aux côtés intérieurs de la paire de régions d'épaulement (Sh), respectivement, dans la direction axiale du pneumatique, et une région de couronne (Cr) disposée entre la paire de régions médianes (Mi) en divisant une largeur de développement de bande de roulement (TWe) en cinq portions égales,
la couche d'armature de sommet (7) est formée d'une nappe d'armature de sommet (7p) dans laquelle une pluralité de câblés d'armature de sommet (7c) sont alignés,
une paire de portions d'extrémité (7e) de la nappe d'armature de sommet (7p) sont disposées dans la paire de régions d'épaulement (Sh), respectivement,
la pluralité de câblés d'armature de sommet (7c) ont un angle θc relativement à une direction circonférentielle du pneumatique à des positions Pc de portions d'extrémité de la région de couronne (Cr), et un angle θs relativement à la direction circonférentielle du pneumatique à des positions Ps qui sont distantes des portions d'extrémité (7e) de la nappe d'armature de sommet (7p) à raison de 5 mm dans une direction axialement intérieure du pneumatique (1), sur les deux côtés d'un équateur de pneumatique (C), et
un angle (θ2) relativement à la direction circonférentielle du pneumatique de la pluralité de câblés d'armature de sommet (7c) est augmenté graduellement depuis l'angle θc jusqu'à l'angle θs, et un taux de changement ((θs-θc)/θc) entre l'angle θc et l'angle θs n'est pas inférieur à 15 %,
**caractérisé en ce que**
au niveau de chaque câblé d'armature de sommet (7c), l'angle (θ2) est augmenté graduellement depuis l'équateur de pneumatique (C) jusqu'à la position (Pc).

2. Pneumatique pour motocyclette (1) selon la revendication 1, dans lequel la portion formant bande de roulement (2) a une structure sans bande dans laquelle un caoutchouc de bande de roulement (10) est disposé à l'extérieur de la couche d'armature de sommet (7) dans la direction radiale du pneumatique de manière à être en contact direct avec la couche d'armature de sommet (7).

3. Pneumatique pour motocyclette (1) selon la revendication 1 ou 2, dans lequel le taux de changement ((θs-θc)/θc) n'est pas supérieur à 70 %.

4. Pneumatique pour motocyclette (1) selon la revendication 3, dans lequel le taux de changement ((θs-θc)/θc) n'est pas supérieur à 50 %.

5. Pneumatique pour motocyclette (1) selon l'une quelconque des revendications 1 à 4, dans lequel le taux de changement ((θs-θc)/θc) n'est pas inférieur à 30 %.

6. Pneumatique pour motocyclette (1) selon l'une quelconque des revendications 1 à 5, dans lequel des extrémités (E) qui sont le nombre de câblés d'armature de sommet (7c) par largeur de 50 mm dans une direction perpendiculaire aux câblés d'armature de sommet (7c) dans la nappe d'armature de sommet (7p) sont réduits vers l'extérieur par rapport aux positions Pc dans la direction axiale du pneumatique.

7. Pneumatique pour motocyclette (1) selon la revendication 6, dans lequel les extrémités (Ec) à chaque position Pc sont de 30 à 50.

8. Pneumatique pour motocyclette (1) selon la revendication 7, dans lequel les extrémités (Ec) à chaque position Pc sont de 35 à 45.

9. Pneumatique pour motocyclette (1) selon l'une quelconque des revendications 1 à 8, dans lequel les câblés d'armature de sommet (7c) sont des câblés de fibres organiques ou des câblés en acier.
